# EUROPEAN PATENT SPECIFICATION

(11) **EP 4 008 941 B1**
(45) Date of publication and mention of the grant of the patent: **30.07.2025**
(21) Application number: 21857976.1
(22) Date of filing: 30.03.2021
(51) Int. Cl.: F16K 31/04, F16K 31/50

(54) **ELECTRIC VALVE**
ELEKTRISCHES VENTIL
SOUPAPE MOTORISÉE

(30) Priority: 18.08.2020 JP 2020138267
(43) Date of publication of application: 08.06.2022
(73) Proprietor: Pacific Industrial Co., Ltd., Ogaki-shi, Gifu 503-8603 (JP)
(72) Inventor: HAYASHI Hisao, Ogaki-shi, Gifu 503-8603 (JP); FUJIMOTO Satoshi, Ogaki-shi, Gifu 503-8603 (JP)
(74) Representative: Kramer Barske Schmidtchen Patentanwälte PartG mbB
(86) International application number: PCT/JP2021/013555
(87) International publication number: WO 2022/038824

(56) References cited:
- EP-A2- 1 806 550
- WO-A1-2018/025373
- JP-A- 2005 207 574
- JP-A- 2018 119 613
- JP-A- 2019 090 514
- JP-A- 2019 206 998
- US-A1- 2018 038 512

## Description

### TECHNICAL FIELD

The present disclosure relates to a motor-driven electric valve.

### BACKGROUND ART

Conventional electric valves, in which a shaft fitted with a valve element and rotated by a motor is supported by a molded resin component integrated with a metal part by insertion molding, are known (see, for example, JP 2019-206998 A (paragraph [0008] to [0020], Fig. 1, Fig. 2, etc.)).

EP 1 806 550 A2, JP 2018-119613 A, JP 2019-90514 A, and US 2018/0038512 A1 disclose further motor-driven valves. JP 2005-207574 A discloses a refrigerant flow control valve.

### SUMMARY OF THE INVENTION

### PROBLEMS TO BE SOLVED BY THE INVENTION

Development of a technique that can keep production cost down for the conventional electric valve described above is desired.

### MEANS OF SOLVING THE PROBLEMS

According to one aspect of the present disclosure made to solve the above problem, there is provided an electric valve according to claim 1 or 2 or 5 or 7.

### BRIEF DESCRIPTION OF THE DRAWINGS

Fig. 1 is a cross-sectional side view of an electric valve according to a first embodiment.
Fig. 2 is a cross-sectional side view of the electric valve when closed.
Fig. 3 is an enlarged cross-sectional side view of a vicinity of an inner part of the electric valve.
Fig. 4 is an enlarged side view of a gap between an inner surface of the body and the inner part.
Fig. 5(A) is an end view along A-A in Fig. 3 of a tubular base portion and the inner part, and (B) is an enlarged end view along A-A of the tubular base portion and the inner part.
Fig. 6 is an end view along B-B in Fig. 3 of the tubular base portion and the inner part.
Fig. 7 is a perspective view from above of the inner part.
Fig. 8 is a perspective view from below of the inner part.
Fig. 9(A) is a top view of the inner part and (B) is a bottom view of the inner part.
Fig. 10 is a cross-sectional side view of a sleeve welded to a large diameter base portion.
Fig. 11 is a cross-sectional side view of the inner part press-fit into the large diameter base portion.
Fig. 12 is a perspective view of the inner part press-fit into the large diameter base portion.
Fig. 13 is a cross-sectional side view of a small diameter base portion press-fit into the large diameter base portion.
Fig. 14 is a cross-sectional side view of the inner part accommodated in a tubular main body.

### MODE FOR CARRYING OUT THE INVENTION

### (First embodiment)

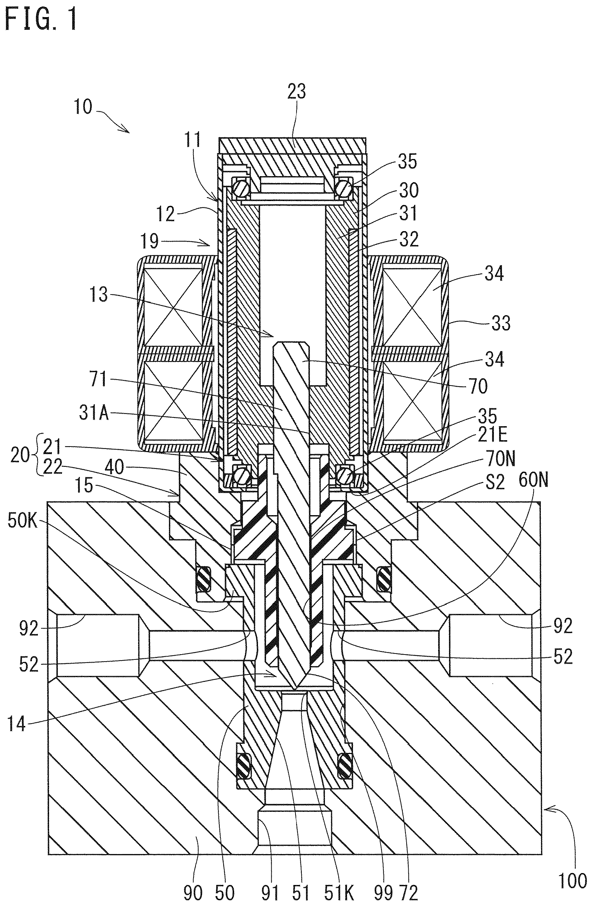

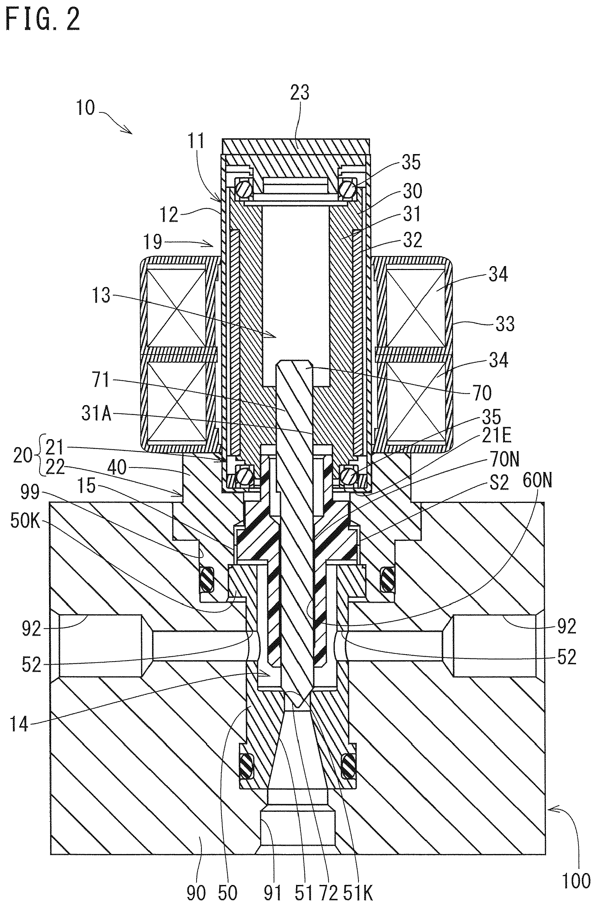

Fig. 1 shows an electric valve 10 according to the first embodiment. The electric valve 10 includes a stator 11, a rotor 30 rotatably disposed inside the stator 11, and a shaft 70 that moves linearly inside the stator 11 by rotation of the rotor 30. The electric valve 10 includes a valve port 51K disposed midway in a flow passage of a fluid, and this valve port 51K is opened and closed by a valve element 72 at a tip of the shaft 70 (see Fig. 1 and Fig. 2).

The stator 11 has a body 12, with a stator field coil 33 fixed on the outside of the body 12. The body 12 is a hollow structure made by a substantially cylindrical tubular main body 20 closed at one end by a lid member 23, and accommodates the rotor 30 and the shaft 70 mentioned above. The stator field coil 33 is in an annular shape and has electromagnetic coils 34 aligned with each other. Hereinafter, where applicable, one side of the body 12 where the lid member 23 is positioned will be referred to as an upper side, and the other side as a lower side.

Inside the body 12 is provided a rotor compartment 13 that accommodates the rotor 30 on the upper side. A valve element compartment 14 that accommodates the valve element 72 is provided on the lower side inside the body 12. The valve element compartment 14 communicates with the valve port 51K at the lower end. An inner part 60 that separates the body 12 from the rotor compartment 13 and the valve element compartment 14 is fixed to an inner surface of the body midway along the shaft.

The body 12 is made of metal. The tubular main body 20 of the body 12 is made up of a sleeve 21 disposed on the upper side and a tubular base portion 22 disposed on the lower side, which are fixed together by welding, for example. The sleeve 21 and the tubular base portion 22 are disposed coaxially.

The sleeve 21 accommodates the rotor 30 mentioned above inside. The stator field coil 33 mentioned above is fixed on an outer circumferential surface of the sleeve 21 near the lower end. A lower end portion of the sleeve 21 is bent perpendicularly and forms an annular extension 21E that extends radially inward. In this embodiment, the sleeve 21 corresponds to a "rotor accommodating portion" in the claims.

The tubular base portion 22 accommodates the valve element 72 at the lower end (distal end) of the shaft 70. A through hole 51 that extends axially through the tubular base portion 22 is tapered downward in a middle part to form the valve port 51K mentioned above. The valve element compartment 14 inside the tubular base portion 22 (i.e., the portion above the valve port 51K) is formed with lateral holes 52 that extend through laterally. The opening at the lower end of the through hole 51 of the tubular base portion 22 is in communication with a flow passage 91 of an external body 100 in which the electric valve 10 is mounted, and lateral holes 52 are in communication with flow passages 92 of the external body 100. The valve element 72 changes the degree of opening of the valve port 51K to change the flow amount of a fluid flowing through the valve port 51K between the flow passages 91 and 92 (see Fig. 1 and Fig. 2).

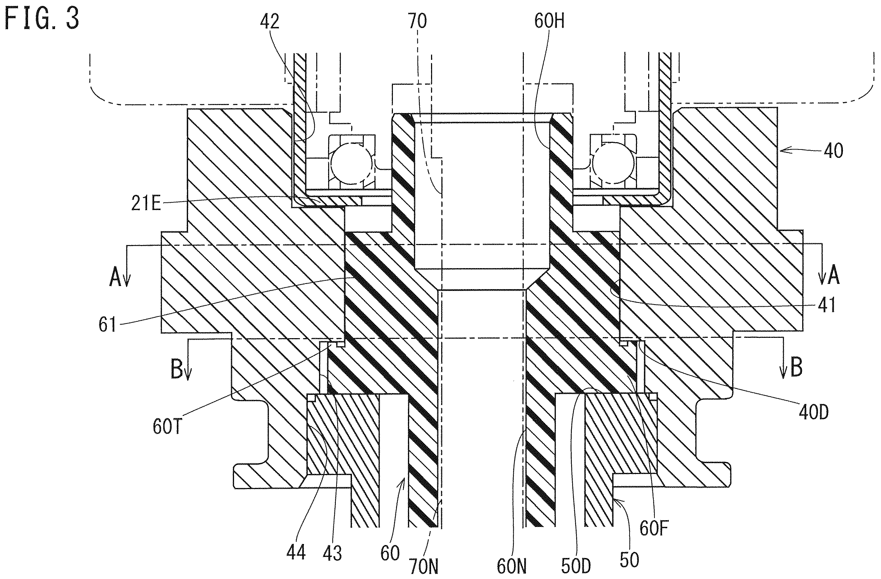

The inner part 60 mentioned above is made of resin and substantially cylindrical. The inner part 60 has a through hole 60H that extends through axially (see Fig. 3), for the shaft 70 mentioned above to pass through. Internal threads 60N are formed on the inner surface of the through hole 60H of the inner part 60. Rotation of the rotor 30 is converted into linear motion of the valve element 72 of the shaft 70 by these internal threads 60N engaging with external threads 70N formed on the outer circumferential surface of the shaft 70. To achieve smooth motion of the shaft 70 that is made of metal, the inner part 60 is composed of a resin having a high mechanical strength (e.g., polyphenylene sulfide or the like), with polytetrafluoroethylene, carbon fiber and the like added thereto, for example. The inner part 60 will be described in more detail later.

The mechanism that moves the shaft 70 is configured as follows, for example. As shown in Fig. 1, the rotor 30 is made up of a cylindrical rotation tube 31 open at both ends, and a magnetic rotor field coil 32 fixed on the outer side of the rotation tube 31. A motor 19 (e.g., stepping motor) is configured with these rotor field coil 32 and stator field coil 33 as main parts, and the rotor field coil 32 is positioned at predetermined rotation position by changing magnetization pattern of the electromagnetic coils 34 of the stator field coil 33. The electric valve 10 is provided with a stopper (not shown) for restricting the rpm of the rotor 30 within a certain range.

Ball bearings 35 are set, each between the upper end of the rotor 30 and the lid member 23, and between the lower end portion of the rotor 30 and the sleeve 21. The outer race and inner race of the upper ball bearing 35 that sandwich balls are fixed to an upper end portion of the rotation tube 31 of the rotor 30 and the lid member 23, respectively. The outer race and inner race of the lower ball bearing 35 that sandwich balls are fixed to a lower end portion of the sleeve 21 of the body 12 and a lower end portion of the rotation tube 31 of the rotor 30, respectively.

The rotation tube 31 of the rotor 30, at the lower end portion of its center hole, is formed with a fit hole 31A that is non-circular when viewed from the axial direction of the rotor 30. The shaft 70 fits in this fit hole 31A. The shaft 70 has a non-circular fit portion 71 near the upper end for fitting into the fit hole 31A of the rotor 30. This enables the shaft 70 to rotate with the rotor 30 as well as to move linearly relative to the rotor 30. As mentioned above, when the rotor rotates 30, the shaft 70 rotates, and moves along the direction of the rotating axis of the rotor 30, by the external threads 70N of the shaft 70 engaging with the internal threads 60N of the inner part 60 that is fixed to the body 12.

The inner part 60 is press-fitted into and fixed to the tubular base portion 22. Specifically, as shown in Fig. 1, the tubular base portion 22 is made up of a large diameter base portion 40 disposed on the upper side and a small diameter base portion 50 disposed on the lower side, these being connected together. The inner part 60 is press-fitted into the large diameter base portion 40 from below. The sleeve 21 is fixed to the large diameter base portion 40 from above. The small diameter base portion 50 has the valve port 51K and lateral holes 52 mentioned above. The small diameter base portion 50 is press-fitted into and fixed to the large diameter base portion 40.

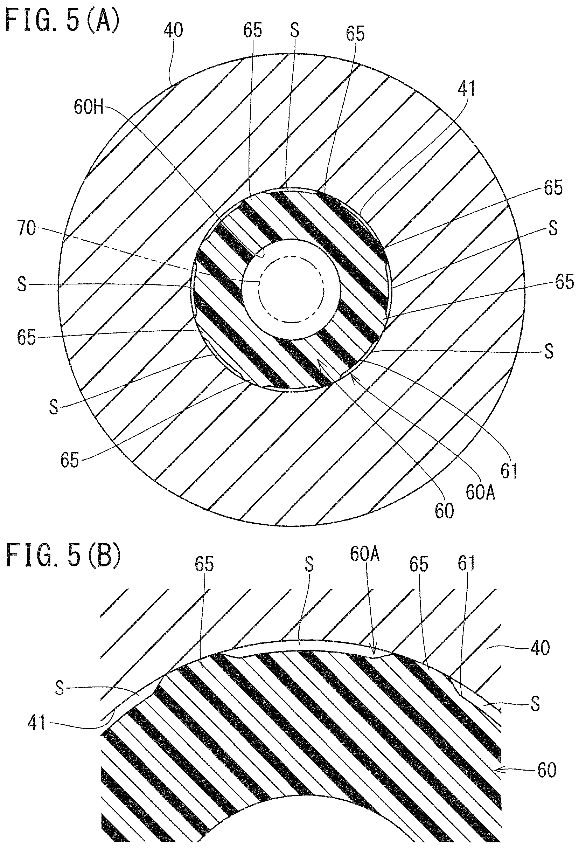

As shown in Fig. 3 and Fig. 5(A), the large diameter base portion 40 has a press-fit reception portion inside where the inner part 60 is press-fitted. This press-fit reception portion is formed by a small diameter hole portion 41 where the inside diameter of the center hole of the large diameter base portion 40 is smallest along the axial direction.

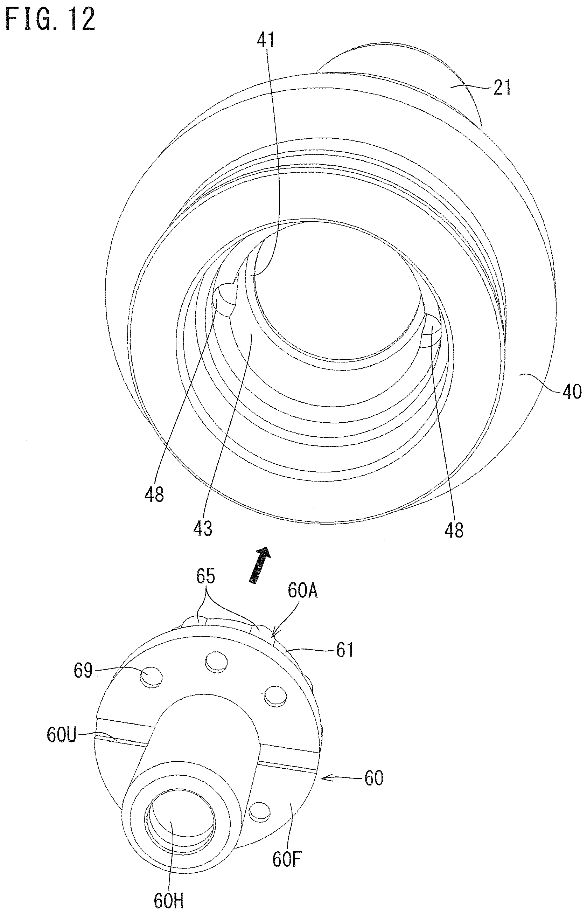

Above the small diameter hole portion 41 of the center hole of the large diameter base portion 40 is provided an upper large diameter hole portion 42 having a larger diameter than the small diameter hole portion 41. The lower end portion of the sleeve 21 fits in this upper large diameter hole portion 42, with the annular extension 21E abutted on the large diameter base portion 40 from above. Below the small diameter hole portion 41 of the center hole of the large diameter base portion 40 is provided an intermediate diameter hole portion 43 having a larger diameter than the small diameter hole portion 41. Below the intermediate diameter hole portion 43 is provided a lower large diameter hole portion 44 having a larger diameter than the intermediate diameter hole portion 43. The intermediate diameter hole portion 43 receives a flange 60F to be described later of the inner part 60. Inside the lower large diameter hole portion 44 is press-fitted the small diameter base portion 50 from below. Engaging recesses 48 extend along the axial direction of the large diameter base portion 40 from the lower end of the intermediate diameter hole portion 43 to a midway point of the small diameter hole portion 41. The engaging recess 48 is located at two points circumferentially spaced apart by 180 degrees of the large diameter base portion 40 (see Fig. 12).

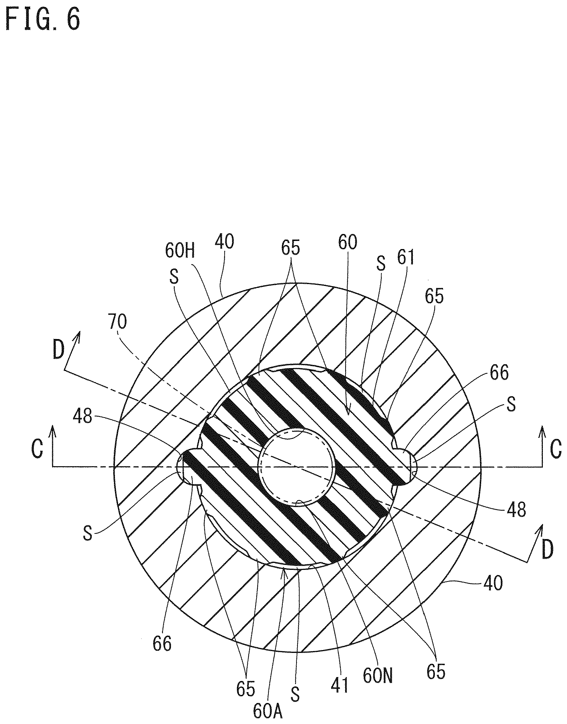

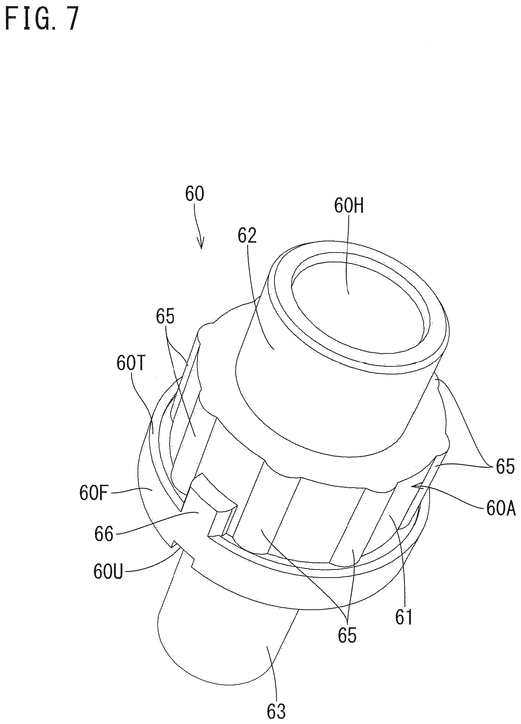

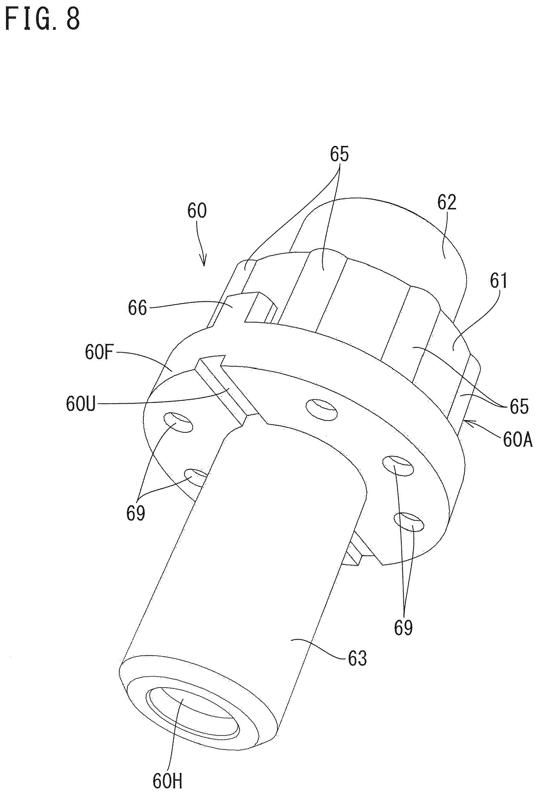

Next, the inner part 60 will be described in more detail. As shown in Fig. 7 and Fig. 8, the inner part 60 increases in diameter in two steps at midway points along the axial direction to form an intermediate diameter portion 61 and the flange 60F. The intermediate diameter portion 61 has an outer circumferential shape smaller than and similar to the inner circumferential shape of the small diameter hole portion 41 of the large diameter base portion 40. At the outer edge on the upper end face of the flange 60F is formed an annular protrusion 60T. As shown in Fig. 3, with the flange 60F sandwiched between the large diameter base portion 40 and the small diameter base portion 50 of the body 12, the inner part 60 is set in position in the direction of the rotating axis of the rotor 30. Specifically, the flange 60F of the inner part 60 is sandwiched between a step surface 40D between the small diameter hole portion 41 and the intermediate diameter hole portion 43 of the large diameter base portion 40, and an upper end face 50D of the small diameter base portion 50 that forms a step surface inside the body 12. More particularly, the annular protrusion 60T of the flange 60F abuts on the step surface 40D of the large diameter base portion 40. Fig. 3 illustrates a cross section of D-D shown in Fig. 6. In this embodiment, the step surface 40D and upper end face 50D correspond to a "positioning step surface" in the claims. The intermediate diameter portion 61 corresponds to a "tubular portion" in the claims.

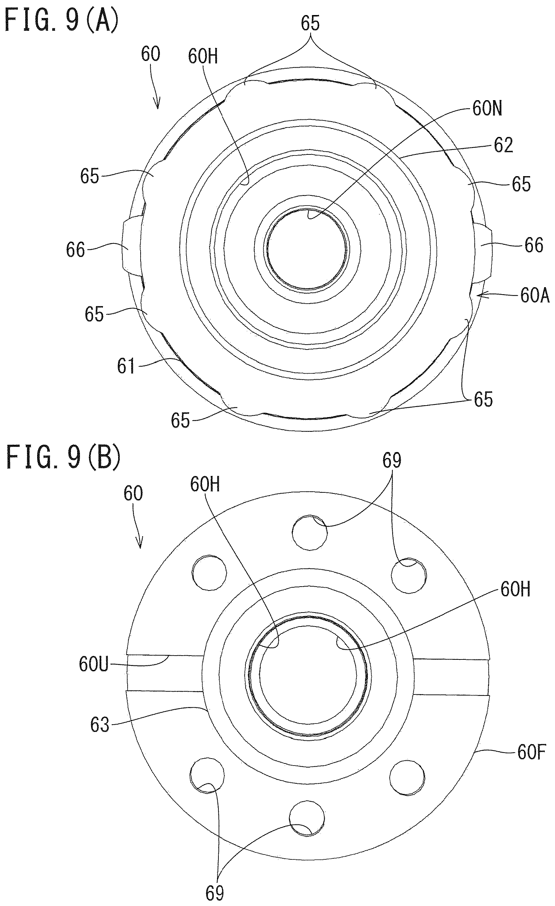

In the lower surface of the flange 60F, as shown in Fig. 8 and Fig. 9(B), there are formed diameterly extending linear grooves 60U at two points circumferentially spaced apart by 180 degrees, as well as circular recesses 69 at a plurality of positions along the circumferential direction. After the inner part 60 has been molded, when a thread portion of the mold is rotated to be removed from the internal threads 60N, these linear grooves 60U and circular recesses 69 can prevent the inner part 60 from rotating with the thread part.

In the configuration in which the interior of the body 12 is divided by the inner part 60 with the shaft 70 passing therethrough into the rotor compartment 13 and the valve element compartment 14, an issue of pressure instability around the valve port 51K can arise because any pressure difference between the rotor compartment 13 and the valve element compartment 14 can lead to a gradual release of pressure from between the inner surface of the internal threads 60N of the inner part 60 and the outer surface of the external threads 70N of the shaft 70. To address this issue, for a conventional electric valve that uses an inner part integrated with the body 12 by insertion molding, a communication hole may be drilled through axially in the inner part separately from the hole in which the shaft 70 passes through, for example, so that the rotor compartment 13 and the valve element compartment 14 communicate with each other. However, this configuration would require the mold for forming the inner part to have a thin pin or the like to form such a communication hole in the inner part, which makes the mold complex and causes the problem of higher production cost. Another problem is poor productivity because the inner part would be more prone to defects due to burrs or the like, for example, around the communication hole in the inner part. In such cases, the entire body 12 has to be replaced if the inner part is insertion-molded therein as is conventional.

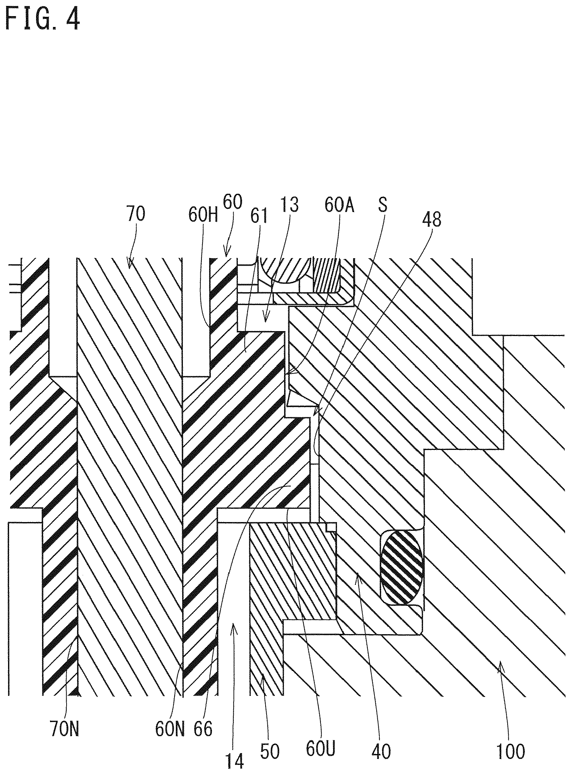

In this embodiment, the inner part 60 has an uneven portion 60A on its outer circumferential surface that creates gaps S between the inner part 60 and the inner surface of the large diameter base portion 40 (i.e., body 12). These gaps S allow communication between the rotor compartment 13 and the valve element compartment 14 (see Fig. 4).

Specifically, as shown in Fig. 7 and Fig. 9(A), the uneven portion 60A of the inner part 60 has a plurality of (e.g., eight) bosses 65 protruding from the outer circumferential surface of the intermediate diameter portion 61 of the inner part 60. In this embodiment, the plurality of bosses 65 is in the form of ridges extending along the axial direction of the inner part 60, equally spaced in the circumferential direction of the inner part 60, and configured the same (i.e., same shape with the same amount of protrusion). The plurality of bosses 65 bulges out when viewed from the axial direction of the inner part 60 and has a bulging surface in a circular arc shape. When the inner part 60 is press-fitted into the large diameter base portion 40, the plurality of bosses 65 is pressed by the inner surface of the small diameter hole portion 41 of the large diameter base portion 40, and the tips of the plurality of bosses 65 are flattened (see Fig. 5(A) and Fig. 5(B)). At this time, axially extending gaps S are formed around the inner part 60 between adjacent ones of the plurality of bosses 65. Since the plurality of bosses 65 is flattened by press-fitting, the distance between the center axis of the inner part 60 and the tip of the boss 65 before the press-fitting of the inner part 60 (radius of a circle circumscribing the tips of the plurality of bosses 65) is larger than the radius of the small diameter hole portion 41 of the large diameter base portion 40.

Further, engaging protrusions 66 protrude from two points of the intermediate diameter portion 61 of the inner part 60 circumferentially spaced apart by 180 degrees, and are connected with the flange 60F. As shown in Fig. 6, the engaging protrusions 66 engage with the engaging recesses 48 mentioned above of the large diameter base portion 40 of the body 12 (see Fig. 12). Thus, the inner part 60 is prevented from rotating relative to the large diameter base portion 40 (i.e., body 12). The engaging protrusions 66 are circumferentially located at different positions from the plurality of bosses 65. Namely, each engaging protrusion 66 is positioned between a pair of adjacent bosses 65. In this embodiment, the engaging protrusion 66 and engaging recess 48 correspond to a "concavo-convex engagement portion" in the claims.

As shown in Fig. 6, when viewed from the axial direction of the inner part 60, the semicircular outwardly bulging tip of the engaging protrusion 66 is cut off and made substantially flat. Accordingly, when the inner part 60 is fixed, gaps S are formed between the inner surface of the engaging recesses 48 of the large diameter base portion 40 formed in a round groove shape as viewed from the axial direction and the tips of the engaging protrusions 66. These gaps S extend between pairs of adjacent bosses 65 as described above, and the rotor compartment 13 and the valve element compartment 14 communicate with each other via the linear grooves 60U, as shown in Fig. 4. Fig. 4 illustrates a cross section of C-C shown in Fig. 6.

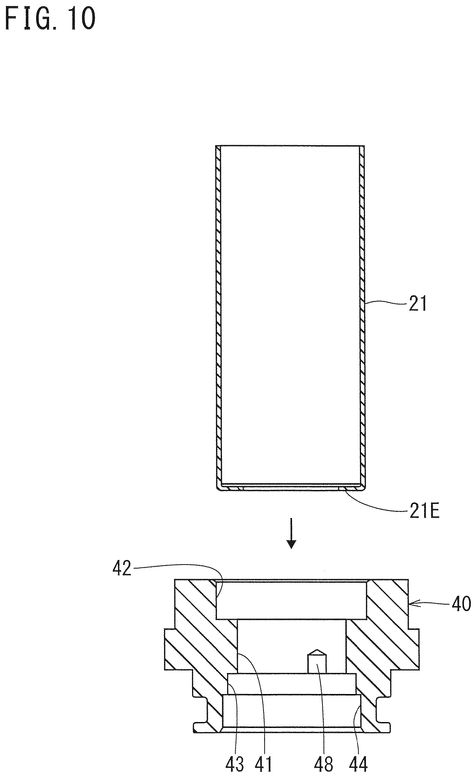

The electric valve 10 of this embodiment is produced as described below, for example. First, as shown in Fig. 10, the sleeve 21 is welded to the upper end of the large diameter base portion 40. In particular, a lower end portion of the sleeve 21 fits into the upper large diameter hole portion 42 of the large diameter base portion 40.

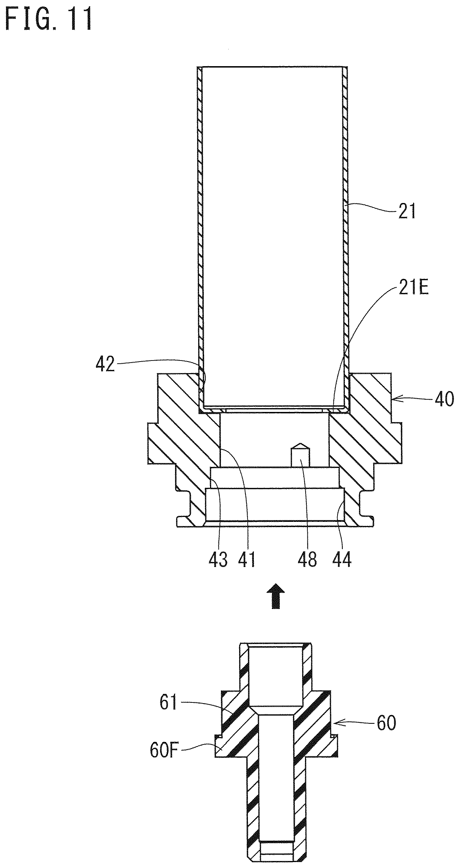

Next, as shown in Fig. 11 and Fig. 12, the inner part 60 is press-fitted from below into the large diameter base portion 40 (i.e., opposite side to the sleeve 21). At this time, the plurality of bosses 65 on the inner part 60 is pressed by the inner surface of the small diameter hole portion 41 of the large diameter base portion 40, and the engaging protrusions 66 of the inner part 60 engage with the engaging recesses 48 of the large diameter base portion 40. As described above, gaps S are formed between the outer surface of the inner part 60 and the inner surface of the large diameter base portion 40. The upper end of the inner part 60 passes through the lower end opening of the sleeve 21 and enters into the sleeve 21. The lower end portion of the inner part 60 protrudes out of the large diameter base portion 40 downward.

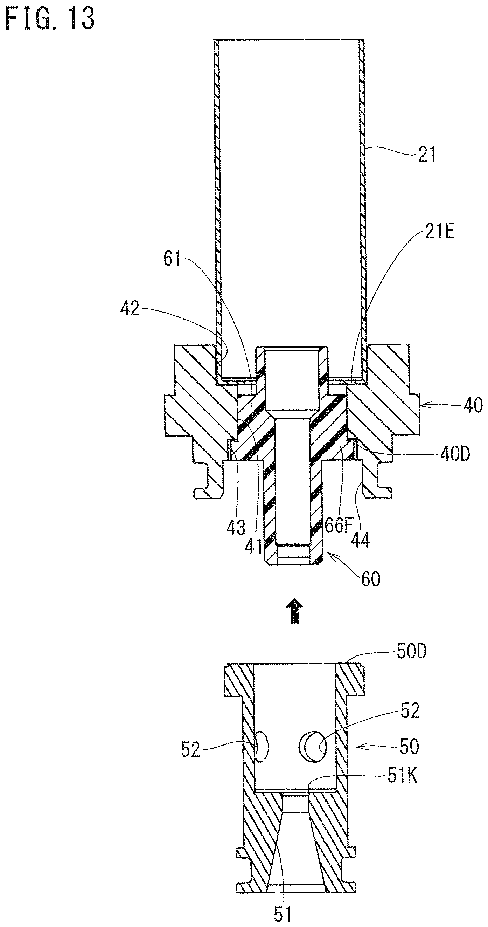

Next, as shown in Fig. 13, the small diameter base portion 50 is press-fitted into the large diameter base portion 40 with the inner part 60 having been press-fitted therein. Specifically, the small diameter base portion 50 is press-fitted into the lower large diameter hole portion 44 at the lower end of the large diameter base portion 40. The lower end of the inner part 60 is positioned inside the small diameter base portion 50. The inner part 60 is set in position in the axial direction by being sandwiched between the step surface 40D of the large diameter base portion 40 and the upper end face 50D of the small diameter base portion 50.

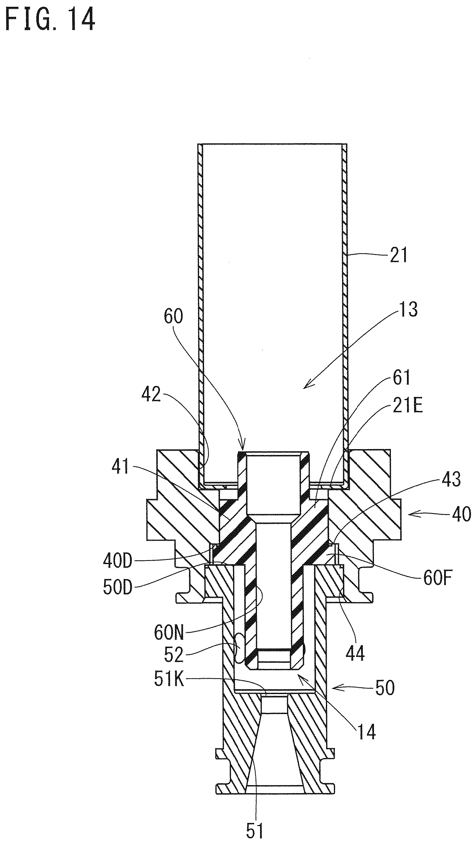

Once the small diameter base portion 50 has been press-fitted into the large diameter base portion 40 and fixed, these together form the tubular base portion 22 as shown in Fig. 14. The valve element compartment 14 is formed by a region inside the tubular base portion 22 between the inner part 60 and the valve port 51K.

Next, the shaft 70, rotor 30, and others are set inside the sleeve 21 from above, and the upper end opening of the sleeve 21 is closed by the lid member 23 (see Fig. 1). The body 12 is thus formed, and the region above the inner part 60 inside the body 12 forms the rotor compartment 13. The stator field coil 33 (see Fig. 1) is fixed to the outer circumferential surface of the sleeve 21, and abutted on the upper end face of the tubular base portion 22 (large diameter base portion 40). O-rings are placed into annular grooves in the outer circumferential surface of the large diameter base portion 40 and small diameter base portion 50 to provide a seal between the inner surfaces of an electric valve mounting hole 99 in the external body 100 and the outer surface of the body 12. The electric valve 10 of this embodiment is thus completed.

Next, the effects of the electric valve 10 of this embodiment will be described. The inner part 60 of the electric valve 10 of this embodiment is fixed to the body 12 by a press fit, so that, as compared to the case where the inner part 60 is integrally formed with the body 12 by insertion molding, there is no need to replace the entire body 12 in the event of a defect occurring in the inner part 60, and thus the production cost can be kept down. Moreover, a pressure difference is hardly generated between the rotor compartment 13 and the valve element compartment 14 in the electric valve 10 because of the gaps S between the inner surface of the body 12 and the inner part 60, which are formed by the uneven portion 60A on the outer surface of the inner part 60, so that the rotor compartment 13 and the valve element compartment 14 communicate with each other. With an inner part integrally formed with the body 12 by insertion molding, forming such gaps would require a complex mold structure, which will raise the production cost of the electric valve. With the electric valve 10, however, gaps S can be formed by the uneven portion 60A on the outer surface of the inner part 60, and by press-fitting the inner part 60 into the body 12. This way, the production cost of the electric valve with gaps S inside can be kept down. To form the inner part by insertion molding as is conventional, it is necessary to use a resin material for the inner part suitable for insertion molding such as a resin readily bondable to the body 12. The inner part 60 of this embodiment in this respect allows for a wider selection of resin materials.

The inner part 60 of the electric valve 10 has the uneven portion 60A that includes a plurality of bosses 65 formed at several circumferential locations on the outer surface of the inner part 60 and pressed by the inner surface of the body 12. This configuration, in which the inner part 60 is press-fitted into the body 12 such as to flatten the tips of the plurality of bosses 65, allows for easy formation of gaps between the plurality of bosses 65. This configuration, in which the gaps S are formed on the outer surface of the inner part 60, can also prevent a loss in rigidity of the inner part 60 to withstand the press-fitting, as compared to a case where a through hole that connects the rotor compartment 13 and the valve element compartment 14 is formed in the inner part 60.

Since the plurality of bosses 65 is circumferentially equally spaced on the inner part 60, gaps between the outer surface of the inner part 60 and the inner surface of the body 12 can be formed at equal distance in the circumferential direction of the inner part 60. The intermediate diameter portion 61 of the inner part 60 has an outer circumferential shape similar to the inner circumferential shape of the small diameter hole portion 41 of the body 12, so that the inner part 60 can readily be set coaxial with the rotating axis of the rotor by making the protruding height of the plurality of bosses 65 equal.

The plurality of bosses 65 of the electric valve 10 is a ridge extending along the axial direction of the through hole 60H of the inner part 60, which helps secure the inner part 60 in a stable manner along the axial direction. Moreover, the gaps S between the outer surface of the inner part 60 and the inner surface of the body 12, which are formed between the plurality of bosses 65, extend in the axial direction, and allow for easier fluid communication between the rotor compartment 13 and the valve element compartment 14. This can better prevent a pressure difference between the rotor compartment 13 and the valve element compartment 14.

The engaging protrusions 66 and engaging recesses 48 prevent rotation of the inner part 60 relative to the body 12 of the electric valve 10. This way, the inner part 60 can be fixed stably, which helps stabilize the linear motion of the shaft 70.

Moreover, gaps S through which the rotor compartment 13 and the valve element compartment 14 communicate with each other are formed between the tips of the engaging protrusions 66 and the inner surface of the engaging recesses 48 in the electric valve 10, and thus a pressure difference between the rotor compartment 13 and the valve element compartment 14 can be made even less likely to occur.

The body 12 of the electric valve 10 has step surfaces 40D and 50D inside, which set the inner part 60 in position in the direction along the rotating axis of the rotor 30. Therefore, the inner part 60 can be fixed more stably.

The tubular base portion 22 of the electric valve 10 allows the inner part 60 to be press-fit from the opposite side to the sleeve 21, so that the inner part 60 can be fixed to the tubular base portion 22 after the sleeve 21 has been welded to the tubular base portion 22. Therefore, the resin inner part 60 can be prevented from being deformed by the heat of the welding. In particular, in a case where the weld point of the sleeve 21 is in close proximity to the inner part 60, the inner part 60 fixed to the large diameter base portion 40 would be prone to deform by the heat during the welding of the sleeve 21. The configuration of this embodiment can prevent such thermal deformation of the inner part 60.

### (Other embodiments)

(1) While the uneven portion 60A that forms the gaps S so that the rotor compartment 13 and the valve element compartment 14 communicate with each other includes a plurality of bosses 65 on the outer circumferential surface of the inner part 60 in the embodiment described above, the uneven portion may be configured to have axially extending grooves formed in the outer circumferential surface of the inner part 60. It is also possible to form the gaps S by providing bosses or axially extending grooves on the inner circumferential surface of the small diameter hole portion 41 of the large diameter base portion 40 into which the inner part 60 is press-fitted.
(2) While the bosses 65 in the embodiment described above are in the form of ridges, they are not limited to this and may, for example, have a semispherical, frustum shape, or the like.
(3) While the plurality of bosses 65 is positioned circumferentially equally spaced on the inner part 60 in the embodiment described above, they need not necessarily be equally spaced apart.
(4) The tubular base portion 22 may be configured such that the inner part 60 is press-fitted into the tubular base portion 22 from above (sleeve 21 side). In this case, the inner part 60 may be sandwiched between a step surface inside the tubular base portion 22 and a lower end portion of the sleeve 21 (annular extension 21E) to set the inner part in position in the axial direction of the body 12 (direction of rotating axis of the rotor 30). In this case, the tubular base portion 22 may be configured as one component rather than made up of the large diameter base portion 40 and small diameter base portion 50.

### DESCRIPTION OF THE REFERENCE NUMERAL

- 10: Electric valve
- 12: Body
- 13: Rotor compartment
- 14: Valve element compartment
- 19: Motor
- 30: Rotor
- 60: Inner part
- 70: Shaft
- 72: Valve element
- S: Gap

## Claims

1. An electric valve (10) comprising:
a body (12, 21, 40, 50) made of metal including a rotor compartment (13) accommodating a rotor (30) of a motor (19) that is a drive source of a valve element (72), and a valve element compartment (14) accommodating the valve element (72) and communicating with a valve port (51K);
an inner part (60) made of resin disposed inside the body (12, 21, 40, 50) and separating the rotor compartment (13) from the valve element compartment (14); and
a shaft (70) passing through a through hole (60H) extending through the inner part (60), rotating with the rotor (30), and including the valve element (72) disposed in a tip of the shaft (70), rotation of the rotor (30) being converted to linear motion of the valve element (72) by engagement between respective threads (60N, 70N) formed in the through hole (60H) and the shaft (70), wherein
the inner part (60) is press-fitted and fixed in a press-fit reception portion (41) between the rotor compartment (13) and the valve element compartment (14) inside the body (12, 21, 40, 50),
the inner part (60) is formed with an uneven portion (60A) on an outer surface of the inner part (60), which forms a gap (S) between the inner part (60) and an inner surface of the body (12, 21, 40, 50) so that the rotor compartment (13) and the valve element compartment (14) communicate with each other, and
the body (12, 21, 40, 50) is formed with a positioning step surface (40D, 50D) inside that sets the inner part (60) in position in a direction of a rotating axis of the rotor (30).

2. An electric valve (10) comprising:
a body (12, 21, 40, 50) made of metal including a rotor compartment (13) accommodating a rotor (30) of a motor (19) that is a drive source of a valve element (72), and a valve element compartment (14) accommodating the valve element (72) and communicating with a valve port (51K);
an inner part (60) made of resin disposed inside the body (12, 21, 40, 50) and separating the rotor compartment (13) from the valve element compartment (14); and
a shaft (70) passing through a through hole (60H) extending through the inner part (60), rotating with the rotor (30), and including the valve element (72) disposed in a tip of the shaft (70), rotation of the rotor (30) being converted to linear motion of the valve element (72) by engagement between respective threads (60N, 70N) formed in the through hole (60H) and the shaft (70), wherein
the inner part (60) is press-fitted and fixed in a press-fit reception portion (41) between the rotor compartment (13) and the valve element compartment (14) inside the body (12, 21, 40, 50),
the inner part (60) is formed with an uneven portion (60A) on an outer surface of the inner part (60), which forms a gap (S) between the inner part (60) and an inner surface of the body (12, 21, 40, 50) so that the rotor compartment (13) and the valve element compartment (14) communicate with each other, and
the uneven portion (60A) includes a plurality of bosses (65) formed at a plurality of circumferential points on an outer surface of the inner part (60) and pressed by an inner surface of the press-fit reception portion (41) of the body (12, 21, 40, 50).

3. The electric valve (10) according to claim 2, wherein the inner part (60) includes a tubular portion (61) having an outer circumferential shape similar to an inner circumferential shape of the press-fit reception portion (41),
the plurality of bosses (65) protruding from an outer circumferential surface of the tubular portion (61) and circumferentially equally spaced on the tubular portion (61).

4. The electric valve (10) according to claim 2 or 3, wherein the plurality of bosses (65) is a ridge extending in an axial direction of the through hole (60H) of the inner part (60).

5. An electric valve (10) comprising:
a body (12, 21, 40, 50) made of metal including a rotor compartment (13) accommodating a rotor (30) of a motor (19) that is a drive source of a valve element (72), and a valve element compartment (14) accommodating the valve element (72) and communicating with a valve port (51K);
an inner part (60) made of resin disposed inside the body (12, 21, 40, 50) and separating the rotor compartment (13) from the valve element compartment (14); and
a shaft (70) passing through a through hole (60H) extending through the inner part (60), rotating with the rotor (30), and including the valve element (72) disposed in a tip of the shaft (70), rotation of the rotor (30) being converted to linear motion of the valve element (72) by engagement between respective threads (60N, 70N) formed in the through hole (60H) and the shaft (70), wherein
the inner part (60) is press-fitted and fixed in a press-fit reception portion (41) between the rotor compartment (13) and the valve element compartment (14) inside the body (12, 21, 40, 50),
the inner part (60) is formed with an uneven portion (60A) on an outer surface of the inner part (60), which forms a gap (S) between the inner part (60) and an inner surface of the body (12, 21, 40, 50) so that the rotor compartment (13) and the valve element compartment (14) communicate with each other, and
the outer surface of the inner part (60) and the inner surface of the body (12, 21, 40, 50) each is formed with a concavo-convex engagement portion (66, 48) to make concavo-convex engagement for preventing rotation of the inner part (60) relative to the body (12, 21, 40, 50).

6. The electric valve (10) according to claim 5, wherein the concavo-convex engagement portion (66, 48) includes an engaging protrusion (66) formed on either one of the outer surface of the inner part (60) and the inner surface of the body (12, 21, 40, 50) and an engaging recess (48) formed on an other one, and a gap (S) through which the rotor compartment (13) and the valve element compartment (14) communicate with each other is formed between a tip of the engaging protrusion (66) and an inner surface of the engaging recess (48).

7. An electric valve (10) comprising:
a body (12, 21, 40, 50) made of metal including a rotor compartment (13) accommodating a rotor (30) of a motor (19) that is a drive source of a valve element (72), and a valve element compartment (14) accommodating the valve element (72) and communicating with a valve port (51K);
an inner part (60) made of resin disposed inside the body (12, 21, 40, 50) and separating the rotor compartment (13) from the valve element compartment (14); and
a shaft (70) passing through a through hole (60H) extending through the inner part (60), rotating with the rotor (30), and including the valve element (72) disposed in a tip of the shaft (70), rotation of the rotor (30) being converted to linear motion of the valve element (72) by engagement between respective threads (60N, 70N) formed in the through hole (60H) and the shaft (70), wherein
the inner part (60) is press-fitted and fixed in a press-fit reception portion (41) between the rotor compartment (13) and the valve element compartment (14) inside the body (12, 21, 40, 50),
the inner part (60) is formed with an uneven portion (60A) on an outer surface of the inner part (60), which forms a gap (S) between the inner part (60) and an inner surface of the body (12, 21, 40, 50) so that the rotor compartment (13) and the valve element compartment (14) communicate with each other,
the body (12, 21, 40, 50) includes
a rotor accommodating portion (21) having the rotor compartment (13) disposed in the rotor accommodating portion (21),
a first base portion (40) welded to the rotor accommodating portion (21), and having the press-fit reception portion (41), into which the inner part (60) is press-fitted from an opposite side to the rotor compartment (13), and
a second base portion (50) coupled to the first base portion (40) from an opposite side to the rotor compartment (13) and having the valve element compartment (14) disposed in the second base portion (50).

## Patentansprüche

1. Elektrisches Ventil (10) mit:
einem Körper (12, 21, 40, 50), der aus Metall ausgebildet ist, mit einem Rotorfach (13), das einen Rotor (30) eines Motors (19) aufnimmt, der eine Antriebsquelle eines Ventilelements (72) ist, und einem Ventilelementfach (14), das das Ventilelement (72) aufnimmt und mit einer Ventilöffnung (51K) in Verbindung steht;
einem inneren Teil (60), der aus Harz ausgebildet ist, der innerhalb des Körpers (12, 21, 40, 50) angeordnet ist und das Rotorfach (13) von dem Ventilelementfach (14) trennt; und
einer Welle (70), die durch ein Durchgangsloch (60H), das sich durch den inneren Teil (60) erstreckt, verläuft, sich mit dem Rotor (30) dreht und das Ventilelement (72), das in einer Spitze der Welle (70) angeordnet ist, aufweist, bei dem eine Drehung des Rotors (30) durch Eingriff zwischen jeweiligen Gewinden (60N, 70N), die in dem Durchgangsloch (60H) und der Welle (70) ausgebildet sind, in lineare Bewegung des Ventilelements (72) umgewandelt wird, bei dem der innere Teil (60) in einem Presspassaufnahmeabschnitt (41) zwischen dem Rotorfach (13) und dem Ventilelementfach (14) innerhalb des Körpers (12, 21, 40, 50) pressgepasst und fixiert ist,
der innere Teil (60) mit einem unebenen Abschnitt (60A) auf einer äußeren Oberfläche des inneren Teils (60) ausgebildet ist, der eine Lücke (S) zwischen dem inneren Teil (60) und einer inneren Oberfläche des Körpers (12, 21, 40, 50) ausbildet, so dass das Rotorfach (13) und das Ventilelementfach (14) miteinander in Verbindung stehen, und
der Körper (12, 21, 40, 50) innen mit einer Positionierungsstufenoberfläche (40D, 50D) ausgebildet ist, die den inneren Teil (60) in einer Richtung einer Drehachse des Rotors (30) in Position bringt.

2. Elektrisches Ventil (10) mit:
einem Körper (12, 21, 40, 50), der aus Metall ausgebildet ist, mit einem Rotorfach (13), das einen Rotor (30) eines Motors (19) aufnimmt, der eine Antriebsquelle eines Ventilelements (72) ist, und einem Ventilelementfach (14), das das Ventilelement (72) aufnimmt und mit einer Ventilöffnung (51K) in Verbindung steht;
einem inneren Teil (60), der aus Harz ausgebildet ist, der innerhalb des Körpers (12, 21, 40, 50) angeordnet ist und das Rotorfach (13) von dem Ventilelementfach (14) trennt; und
einer Welle (70), die durch ein Durchgangsloch (60H), das sich durch den inneren Teil (60) erstreckt, verläuft, sich mit dem Rotor (30) dreht und das Ventilelement (72), das in einer Spitze der Welle (70) angeordnet ist, aufweist, bei dem eine Drehung des Rotors (30) durch Eingriff zwischen jeweiligen Gewinden (60N, 70N), die in dem Durchgangsloch (60H) und der Welle (70) ausgebildet sind, in lineare Bewegung des Ventilelements (72) umgewandelt wird, bei dem der innere Teil (60) in einem Presspassaufnahmeabschnitt (41) zwischen dem Rotorfach (13) und dem Ventilelementfach (14) innerhalb des Körpers (12, 21, 40, 50) pressgepasst und fixiert ist,
der innere Teil (60) mit einem unebenen Abschnitt (60A) auf einer äußeren Oberfläche des inneren Teils (60) ausgebildet ist, der eine Lücke (S) zwischen dem inneren Teil (60) und einer inneren Oberfläche des Körpers (12, 21, 40, 50) ausbildet, so dass das Rotorfach (13) und das Ventilelementfach (14) miteinander in Verbindung stehen, und
der unebene Abschnitt (60A) eine Mehrzahl von Vorsprüngen (65) aufweist, die an einer Mehrzahl von Umfangspunkten auf einer äußeren Oberfläche des inneren Teils (60) ausgebildet sind und durch eine innere Oberfläche des Presspassaufnahmeabschnitts (41) des Körpers (12, 21, 40, 50) gepresst werden.

3. Elektrisches Ventil (10) nach Anspruch 2, bei dem der innere Teil (60) einen rohrförmigen Abschnitt (61) mit einer Außenumfangsform ähnlich einer Innenumfangsform des Presspassaufnahmeabschnitts (41) aufweist,
die Mehrzahl von Vorsprüngen (65) von einer Außenumfangsoberfläche des rohrförmigen Abschnitts (61) vorsteht und auf dem rohrförmigen Abschnitt (61) umfänglich gleich beabstandet ist.

4. Elektrisches Ventil (10) nach Anspruch 2 oder 3, bei dem die Mehrzahl von Vorsprüngen (65) eine Erhöhung ist, die sich in einer axialen Richtung des Durchgangslochs (60H) des inneren Teils (60) erstreckt.

5. Elektrisches Ventil (10) mit:
einem Körper (12, 21, 40, 50), der aus Metall ausgebildet ist, mit einem Rotorfach (13), das einen Rotor (30) eines Motors (19) aufnimmt, der eine Antriebsquelle eines Ventilelements (72) ist, und einem Ventilelementfach (14), das das Ventilelement (72) aufnimmt und mit einer Ventilöffnung (51K) in Verbindung steht;
einem inneren Teil (60), der aus Harz ausgebildet ist, der innerhalb des Körpers (12, 21, 40, 50) angeordnet ist und das Rotorfach (13) von dem Ventilelementfach (14) trennt; und
einer Welle (70), die durch ein Durchgangsloch (60H), das sich durch den inneren Teil (60) erstreckt, verläuft, sich mit dem Rotor (30) dreht und das Ventilelement (72), das in einer Spitze der Welle (70) angeordnet ist, aufweist, bei dem eine Drehung des Rotors (30) durch Eingriff zwischen jeweiligen Gewinden (60N, 70N), die in dem Durchgangsloch (60H) und der Welle (70) ausgebildet sind, in lineare Bewegung des Ventilelements (72) umgewandelt wird, bei dem der innere Teil (60) in einem Presspassaufnahmeabschnitt (41) zwischen dem Rotorfach (13) und dem Ventilelementfach (14) innerhalb des Körpers (12, 21, 40, 50) pressgepasst und fixiert ist,
der innere Teil (60) mit einem unebenen Abschnitt (60A) auf einer äußeren Oberfläche des inneren Teils (60) ausgebildet ist, der eine Lücke (S) zwischen dem inneren Teil (60) und einer inneren Oberfläche des Körpers (12, 21, 40, 50) ausbildet, so dass das Rotorfach (13) und das Ventilelementfach (14) miteinander in Verbindung stehen, und
die äußere Oberfläche des inneren Teils (60) und die innere Oberfläche des Körpers (12, 21, 40, 50) jeweils mit einem konkav-konvexen Eingriffsabschnitt (66, 48) ausgebildet sind, so dass sie einen konkav-konvexen Eingriff zum Verhindern einer Drehung des inneren Teils (60) relativ zu dem Körper (12, 21, 40, 50) herstellen.

6. Elektrisches Ventil (10) nach Anspruch 5, bei dem der konkav-konvexe Eingriffsabschnitt (66, 48) einen Eingriffsvorsprung (66), der auf einer der äußeren Oberfläche des inneren Teils (60) und der inneren Oberfläche des Körpers (12, 21, 40, 50) ausgebildet ist, und eine Eingriffsvertiefung (48), die auf einer anderen ausgebildet ist, aufweist, und eine Lücke (S), durch die das Rotorfach (13) und das Ventilelementfach (14) miteinander in Verbindung stehen, zwischen einer Spitze des Eingriffsvorsprungs (66) und einer inneren Oberfläche der Eingriffsvertiefung (48) ausgebildet ist.

7. Elektrisches Ventil (10) mit:
einem Körper (12, 21, 40, 50), der aus Metall ausgebildet ist, mit einem Rotorfach (13), das einen Rotor (30) eines Motors (19) aufnimmt, der eine Antriebsquelle eines Ventilelements (72) ist, und einem Ventilelementfach (14), das das Ventilelement (72) aufnimmt und mit einer Ventilöffnung (51K) in Verbindung steht;
einem inneren Teil (60), der aus Harz ausgebildet ist, der innerhalb des Körpers (12, 21, 40, 50) angeordnet ist und das Rotorfach (13) von dem Ventilelementfach (14) trennt; und
einer Welle (70), die durch ein Durchgangsloch (60H), das sich durch den inneren Teil (60) erstreckt, verläuft, sich mit dem Rotor (30) dreht und das Ventilelement (72), das in einer Spitze der Welle (70) angeordnet ist, aufweist, bei dem eine Drehung des Rotors (30) durch Eingriff zwischen jeweiligen Gewinden (60N, 70N), die in dem Durchgangsloch (60H) und der Welle (70) ausgebildet sind, in lineare Bewegung des Ventilelements (72) umgewandelt wird, bei dem der innere Teil (60) in einem Presspassaufnahmeabschnitt (41) zwischen dem Rotorfach (13) und dem Ventilelementfach (14) innerhalb des Körpers (12, 21, 40, 50) pressgepasst und fixiert ist,
der innere Teil (60) mit einem unebenen Abschnitt (60A) auf einer äußeren Oberfläche des inneren Teils (60) ausgebildet ist, der eine Lücke (S) zwischen dem inneren Teil (60) und einer inneren Oberfläche des Körpers (12, 21, 40, 50) ausbildet, so dass das Rotorfach (13) und das Ventilelementfach (14) miteinander in Verbindung stehen,
der Körper (12, 21, 40, 50)
einen Rotoraufnahmeabschnitt (21), der das Rotorfach (13), das in dem Rotoraufnahmeabschnitt (21) angeordnet ist, aufweist,
einen ersten Basisabschnitt (40), der an den Rotoraufnahmeabschnitt (21) geschweißt ist und den Presspassaufnahmeabschnitt (41) aufweist, in den der innere Teil (60) von einer zu dem Rotorfach (13) entgegengesetzten Seite pressgepasst ist, und
einen zweiten Basisabschnitt (50), der von einer zu dem Rotorfach (13) entgegengesetzten Seite an den ersten Basisabschnitt (40) gekoppelt ist und das Ventilelementfach (14), das in dem zweiten Basisabschnitt (50) angeordnet ist, aufweist, aufweist.

## Revendications

1. Soupape motorisée (10) comprenant :
un corps (12, 21, 40, 50) en métal comprenant un compartiment de rotor (13) accueillant un rotor (30) d'un moteur (19) qui est une source d'entraînement d'un élément de soupape (72), et un compartiment d'élément de soupape (14) accueillant l'élément de soupape (72) et communiquant avec un orifice de soupape (51K) ;
une partie intérieure (60) en résine disposée à l'intérieur du corps (12, 21, 40, 50) et séparant le compartiment de rotor (13) du compartiment d'élément de soupape (14) ; et
un arbre (70) traversant un trou de passage (60H) s'étendant à travers la partie intérieure (60), tournant avec le rotor (30), et comprenant l'élément de soupape (72) disposé dans une extrémité de l'arbre (70), la rotation du rotor (30) étant convertie en mouvement linéaire de l'élément de soupape (72) par engagement entre les filetages respectifs (60N, 70N) formés dans le trou de passage (60H) et l'arbre (70), dans laquelle
la partie intérieure (60) est ajustée par pression et fixée dans une partie de réception ajustée par pression (41) entre le compartiment de rotor (13) et le compartiment d'élément de soupape (14) à l'intérieur du corps (12, 21, 40, 50),
la partie intérieure (60) est formée d'une partie irrégulière (60A) sur une surface extérieure de la partie intérieure (60), qui forme un espace (S) entre la partie intérieure (60) et une surface intérieure du corps (12, 21, 40, 50) de sorte que le compartiment de rotor (13) et le compartiment d'élément de soupape (14) communiquent l'un avec l'autre, et
le corps (12, 21, 40, 50) est formé d'une surface de positionnement (40D, 50D) à l'intérieur qui met la partie intérieure (60) en position dans la direction d'un axe de rotation du rotor (30).

2. Soupape motorisée (10) comprenant :
un corps (12, 21, 40, 50) en métal comprenant un compartiment de rotor (13) accueillant un rotor (30) d'un moteur (19) qui est une source d'entraînement d'un élément de soupape (72), et un compartiment d'élément de soupape (14) accueillant l'élément de soupape (72) et communiquant avec un orifice de soupape (51K) ;
une partie intérieure (60) en résine disposée à l'intérieur du corps (12, 21, 40, 50) et séparant le compartiment de rotor (13) du compartiment d'élément de soupape (14) ; et
un arbre (70) traversant un trou de passage (60H) s'étendant à travers la partie intérieure (60), tournant avec le rotor (30), et comprenant l'élément de soupape (72) disposé dans une extrémité de l'arbre (70), la rotation du rotor (30) étant convertie en mouvement linéaire de l'élément de soupape (72) par engagement entre les filetages respectifs (60N, 70N) formés dans le trou de passage (60H) et l'arbre (70), dans lequel
la partie intérieure (60) est ajustée par pression et fixée dans une partie de réception ajustée par pression (41) entre le compartiment de rotor (13) et le compartiment d'élément de soupape (14) à l'intérieur du corps (12, 21, 40, 50),
la partie intérieure (60) est formée d'une partie irrégulière (60A) sur une surface extérieure de la partie intérieure (60), qui forme un espace (S) entre la partie intérieure (60) et une surface intérieure du corps (12, 21, 40, 50) de sorte que le compartiment de rotor (13) et le compartiment d'élément de soupape (14) communiquent l'un avec l'autre, et
la partie irrégulière (60A) comprend une pluralité de bossages (65) formés en une pluralité de points circonférentiels sur une surface extérieure de la partie intérieure (60) et pressés par une surface intérieure de la partie de réception ajustée par pression (41) du corps (12, 21, 40, 50).

3. Soupape motorisée (10) selon la revendication 2, dans laquelle la partie intérieure (60) comprend une partie tubulaire (61) ayant une forme circonférentielle extérieure similaire à une forme circonférentielle intérieure de la partie de réception ajustée par pression (41),
la pluralité de bossages (65) faisant saillie à partir d'une surface circonférentielle extérieure de la partie tubulaire (61) et espacés de manière circonférentiellement égale sur la partie tubulaire (61).

4. Soupape motorisée (10) selon la revendication 2 ou 3, dans laquelle la pluralité de bossages (65) est une arête s'étendant dans une direction axiale du trou de passage (60H) de la partie intérieure (60).

5. Soupape motorisée (10) comprenant :
un corps (12, 21, 40, 50) en métal comprenant un compartiment de rotor (13) accueillant un rotor (30) d'un moteur (19) qui est une source d'entraînement d'un élément de soupape (72), et un compartiment d'élément de soupape (14) accueillant l'élément de soupape (72) et communiquant avec un orifice de soupape (51K) ;
une partie intérieure (60) en résine disposée à l'intérieur du corps (12, 21, 40, 50) et séparant le compartiment de rotor (13) du compartiment d'élément de soupape (14) ; et
un arbre (70) traversant un trou de passage (60H) s'étendant à travers la partie intérieure (60), tournant avec le rotor (30), et comprenant l'élément de soupape (72) disposé dans une extrémité de l'arbre (70), la rotation du rotor (30) étant convertie en mouvement linéaire de l'élément de soupape (72) par engagement entre les filetages respectifs (60N, 70N) formés dans le trou de passage (60H) et l'arbre (70), dans lequel
la partie intérieure (60) est ajustée par pression et fixée dans une partie de réception ajustée par pression (41) entre le compartiment de rotor (13) et le compartiment d'élément de soupape (14) à l'intérieur du corps (12, 21, 40, 50),
la partie intérieure (60) est formée d'une partie irrégulière (60A) sur une surface extérieure de la partie intérieure (60), qui forme un espace (S) entre la partie intérieure (60) et une surface intérieure du corps (12, 21, 40, 50) de sorte que le compartiment de rotor (13) et le compartiment d'élément de soupape (14) communiquent l'un avec l'autre, et
la surface extérieure de la partie intérieure (60) et la surface intérieure du corps (12, 21, 40, 50) sont chacune formées d'une partie d'engagement concavo-convexe (66, 48) pour réaliser un engagement concavo-convexe afin d'empêcher la rotation de la partie intérieure (60) par rapport au corps (12, 21, 40, 50).

6. Soupape motorisée (10) selon la revendication 5, dans laquelle la partie d'engagement concavo-convexe (66, 48) comprend une saillie d'engagement (66) formée sur l'une des surfaces extérieures de la partie intérieure (60) et la surface intérieure du corps (12, 21, 40, 50) et un évidement d'engagement (48) formé sur l'autre, et un espace (S) à travers lequel le compartiment de rotor (13) et le compartiment d'élément de soupape (14) communiquent l'un avec l'autre est formé entre une extrémité de la protubérance d'engagement (66) et une surface intérieure de l'évidement d'engagement (48).

7. Soupape motorisée (10) comprenant :
un corps (12, 21, 40, 50) en métal comprenant un compartiment de rotor (13) accueillant un rotor (30) d'un moteur (19) qui est une source d'entraînement d'un élément de soupape (72), et un compartiment d'élément de soupape (14) accueillant l'élément de soupape (72) et communiquant avec un orifice de soupape (51K) ;
une partie intérieure (60) en résine disposée à l'intérieur du corps (12, 21, 40, 50) et séparant le compartiment de rotor (13) du compartiment d'élément de soupape (14) ; et
un arbre (70) traversant un trou de passage (60H) s'étendant à travers la partie intérieure (60), tournant avec le rotor (30), et comprenant l'élément de soupape (72) disposé dans une extrémité de l'arbre (70), la rotation du rotor (30) étant convertie en mouvement linéaire de l'élément de soupape (72) par engagement entre les filetages respectifs (60N, 70N) formés dans le trou de passage (60H) et l'arbre (70), dans laquelle
la partie intérieure (60) est ajustée par pression et fixée dans une partie de réception ajustée par pression (41) entre le compartiment de rotor (13) et le compartiment d'élément de soupape (14) à l'intérieur du corps (12, 21, 40, 50),
la partie intérieure (60) est formée d'une partie irrégulière (60A) sur une surface extérieure de la partie intérieure (60), qui forme un espace (S) entre la partie intérieure (60) et une surface intérieure du corps (12, 21, 40, 50) de sorte que le compartiment de rotor (13) et le compartiment d'élément de soupape (14) communiquent l'un avec l'autre,
le corps (12, 21, 40, 50) comprend
une partie de logement de rotor (21) ayant le compartiment de rotor (13) disposé dans la partie de logement de rotor (21),
une première partie de base (40) soudée à la partie de logement de rotor (21), et ayant la partie de réception ajustée par pression (41), dans laquelle la partie intérieure (60) est ajustée par pression depuis un côté opposé au compartiment de rotor (13), et
une deuxième partie de base (50) couplée à la première partie de base (40) d'un côté opposé au compartiment de rotor (13) et ayant le compartiment d'élément de soupape disposé dans la deuxième partie de base (50).
